# EUROPEAN PATENT APPLICATION

(11) **EP 4 825 734 A1**
(43) Date of publication of application: **21.10.2026**
(21) Application number: 26170620.4
(22) Date of filing: 02.04.2026
(51) Int. Cl.: B64D 27/40, B64D 27/18

(54) **PROPULSION SYSTEM FOR AN AIRCRAFT COMPRISING AN ENGINE PYLON, A TURBINE ENGINE, AND MEANS FOR SECURING THE TURBINE ENGINE TO THE ENGINE PYLON**

(30) Priority: 17.04.2025 US 202563790512 P
(71) Applicant: Airbus Operations S.A.S., 31060 Toulouse (FR)
(72) Inventor: COMBES, Pierre-Antoine, 31060 Toulouse (FR); JOLIVET, Nicolas, 31060 Toulouse (FR); BERJOT, Michael, 31060 Toulouse (FR)
(74) Representative: Cabinet Le Guen Maillet

(57) **Abstract**

The invention relates to a propulsion system (100) comprising a fan casing (104a), an engine pylon (102) comprising a box (103) with a nose (102a) and a yoke (102b) fastened under the box (103) and extending on both sides of a vertical median plane (P), two rods (110a-b) arranged on each side of the vertical median plane (P), each having a first end articulated to the yoke (102b) and a second end articulated to a front lug (112a-b) of the fan casing (104a), two shackles (116a-b) arranged on each side of the vertical median plane (P), each being mounted articulated to the nose (102a) through a first articulation point (117a), and to a middle lug (118a-b) of the fan casing (104a) through a second articulation point (117b) and a third articulation point (117c). With this arrangement, the mounting of the turbojet engine to the engine pylon is simplified.

## Description

### TECHNICAL FIELD

The present invention relates to a propulsion system for aircraft, wherein the propulsion system comprises a turbojet engine, an engine pylon and means for securing the turbojet engine to the engine pylon, as well as to an aircraft comprising such a propulsion system.

### PRIOR ART

An aircraft typically comprises a plurality of propulsion systems. Each propulsion system is generally attached under a wing of the aircraft and comprises an engine pylon attached under the wing, a turbojet engine and fastening means for securing the turbojet engine under the engine pylon.

Although current propulsion systems are satisfactory, the assembly and disassembly of the fastening means are generally time-consuming and complex, and it is desirable to find an arrangement that reduces installation time and complexity.

### DESCRIPTION OF THE INVENTION

One object of the present invention is to propose an aircraft propulsion system comprising a turbojet engine, an engine pylon and fastening means securing the turbojet engine to the engine pylon, the assembly/disassembly of which is facilitated.

To this end, a propulsion system for an aircraft is proposed, comprising:
- a turbojet engine having a fan casing extending along a longitudinal direction and having a vertical median plane,
- an engine pylon comprising a box with a nose at the front of the box and a yoke fastened under the box and extending on both sides of the vertical median plane,
- two rods arranged on each side of the vertical median plane, each having a first end articulated to the yoke and a second end articulated to a front lug of the fan casing, and
- two shackles arranged on each side of the vertical median plane, each being mounted articulated to the nose through a first articulation point, and to a middle lug of the fan casing through a second articulation point and a third articulation point.

With such an arrangement, the mounting of the turbojet engine to the engine pylon is simplified. Advantageously, a double pin is used in the first articulation point.

Advantageously, the third articulation point is a waiting fail safe connection point. Advantageously, the articulation of each end of each rod is a ball joint.

Advantageously, the articulation of each articulation point is a pivot joint.

Advantageously, the axes of the pivot joints are perpendicular to the vertical median plane.

Advantageously, the shackles are arranged between the rods.

The invention also proposes an aircraft comprising a propulsion system according to one of the preceding variants.

### BRIEF DESCRIPTION OF THE DRAWINGS

The features of the invention mentioned above, as well as others, will become clearer upon reading the following description of an exemplary embodiment, said description being made in relation to the attached drawings, in which:
Figure 1 is a side view of an aircraft according to the invention,
Figure 2 is a schematic representation in side view of a propulsion system according to the invention, and
Figure 3 is a perspective view of a front detail of the propulsion system according to the invention.

### DETAILED DESCRIPTION OF EMBODIMENTS

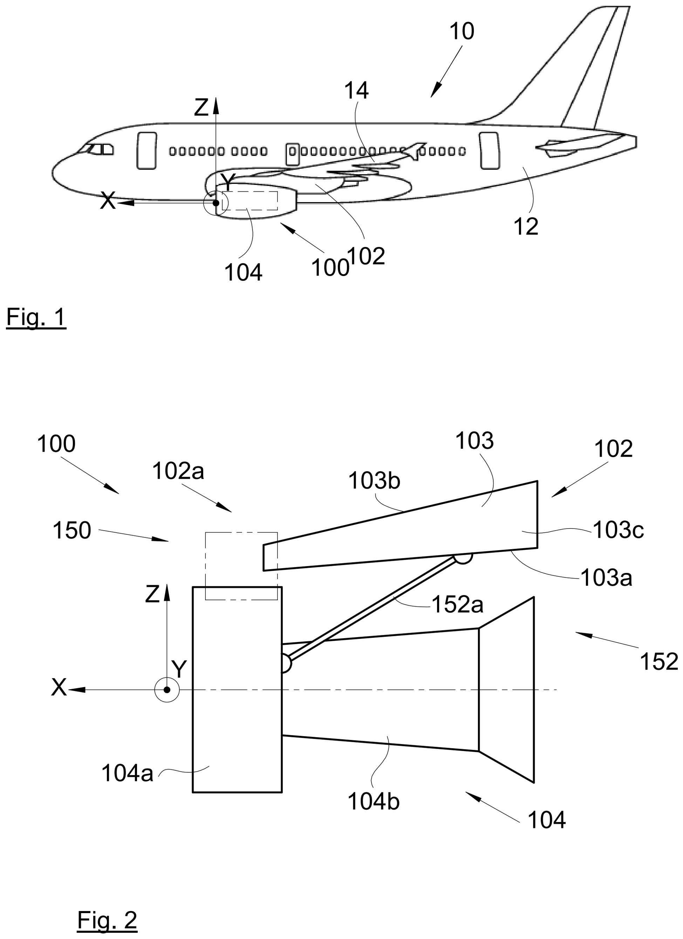

Fig. 1 shows an aircraft 10 that comprises a propulsion system 100 according to the invention.

The aircraft 10 comprises, on both sides of a fuselage 12, a wing 14 to which an engine pylon 102 is attached. The propulsion system 100 comprises the engine pylon 102 and a turbojet engine 104 surrounded by a nacelle.

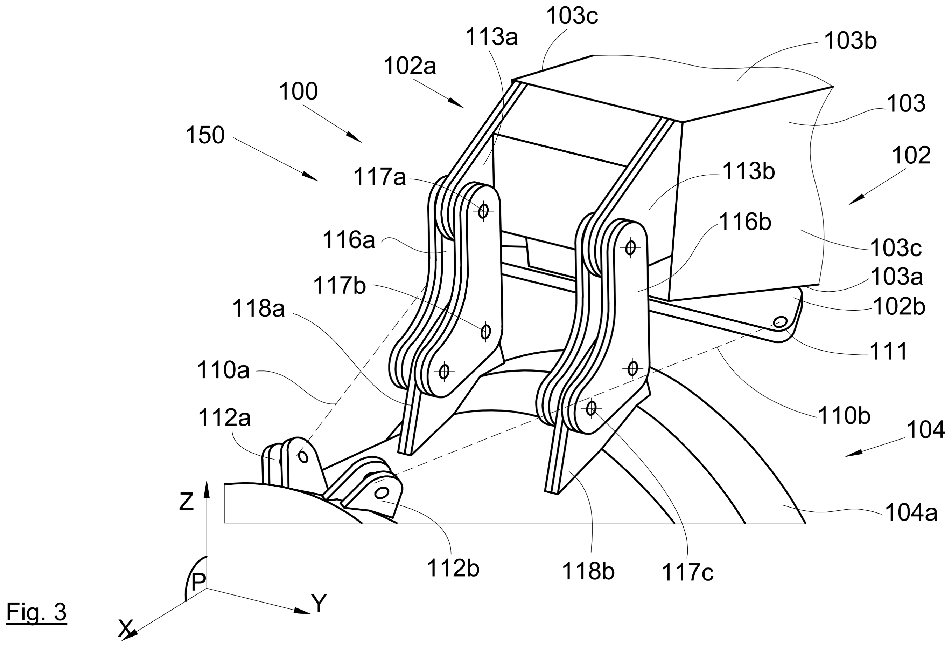

Fig. 2 shows a side view of the propulsion system 100 according to the invention and Fig. 3 shows a detail of the propulsion system 100.

High loads have to be transferred from the turbojet engine 104 to the wing 14. At this end, specific engine mounts are installed.

In the following description, terms relating to position are taken with reference to an aircraft in normal flight position, i.e. as shown in Figure 1, and the positions "front " and "rear" are taken in relation to the front and rear of the turbojet engine and in relation to the direction of travel F of the aircraft 10 when the turbojet engine 104 is operating.

In the following description, and by convention, X is the longitudinal direction of the turbojet engine 104, which is parallel to the longitudinal axis of the turbojet engine 104, Y is the transverse direction, which is horizontal when the aircraft is on the ground, and Z is the vertical direction, which is vertical when the aircraft is on the ground, these three directions X, Y and Z being orthogonal to each other.

The turbojet engine 102 has a shape of revolution about its longitudinal axis and comprises a fan casing 104a at the front and a rear casing 104b attached at the rear of the fan casing 104a. The fan casing 104a extends along the longitudinal direction X and has a vertical median plane P (XZ). The propulsion system 100 is generally symmetrical with respect to the vertical median plane P. The engine pylon 102 comprises a box 103 realized by assembly of a lower spar 103a, an upper spar 103b and two lateral walls 103c. At the front, the box 103 comprises a nose 102a which is a front rib (called N1) of the box 103.

The engine pylon 102 comprises also a yoke 102b which is rigidly fastened under the box 103, and more precisely below the lower spar 103a. The yoke 102b takes the form of a rigid plate attached under the box 103. The yoke 102b extends on both sides of the vertical median plane P and the yoke 102b has two ends 111 which are beyond the lateral walls 103c of the box 103, it means that the yoke 102b is larger than the box 103.

The engine mounts comprise a front engine mount 150 and a rear engine mount 152.

The front engine mount 150 is shown in Fig. 3 and it is disposed above the fan casing 104a and it is installed between the nose 102a and the yoke 102b and the fan casing 104a.

Here, the rear engine mount 152 comprises two rear rods 152a arranged on each side of the vertical median plane P and each rear rod 152a is connected between the casing of the turbojet engine 104 and the engine pylon 102. More precisely, here, each rear rod 152a is connected between the rear of the fan casing 104a and the lower spar 103a.

The rear engine mount 152 can take other form and is not a part of the invention.

The front engine mount 150 comprises two rods 110a-b which are arranged on each side of the vertical median plane P. Each rod 110a-b has a first end articulated to an end 111 of the yoke 102b and a second end articulated to a front lug 112a-b of the fan casing 104a. The front lugs 112a-b are arranged on each side of the vertical median plane P and they are forward compared to the end 111 of the yoke 102b.

At each front lug 112a-b, the attachment of the rod 110a-b takes the form of a clevis, where the front lug 112a-b forms a female clevis and the rod 110a-b forms a male clevis inserted and articulated in the female clevis by a pin. Other arrangements are possible.

At each end 111 of the yoke 102b, the attachment of the rod 110a-b takes the form of a clevis, where the yoke 102b forms a male clevis and the rod 110a-b forms a female clevis in which is inserted and articulated the male clevis by a pin. Other arrangements are possible.

In the current embodiment, the distance between the first ends of the rods 110a-b is bigger than the distance between the second end of the rods 110a-b.

The front engine mount 150 comprises also two shackles 116a-b which are arranged on each side of the vertical median plane P. Each shackle 116a-b is mounted articulated to the nose 102a and to a middle lug 118a-b of the fan casing 104a. Each shackle 116a-b is fastened to the nose 102a through a first articulation point 117a and each shackle 116a-b is fastened to the middle lug 118a-b through a second articulation point 117b and a third articulation point 117c.

Each shackle 116a-b is vertically oriented and is in a plane parallel to the vertical median plane P. At the nose 102a, each shackle 116a-b is attached to a fitting 113a-b of the box 103 and here an extension of the lateral wall 103c of the box 103.

Here, each attachment of the shackles 116a-b takes the form of a clevis with a pin.

In the shackles 116a-b, the load inputs are aligned with the main webs of the structural partitions constituting the box 103: the vertical shackles 116a-b borned by the lateral panels are contained in a XZ-plane. Their projection is in a pure Z-direction (vertical) so that they ensure the balancing of the MX (Engine Torque).

In relation to the longitudinal direction X, the middle lugs 118a-b are between the front lugs 112a-b and the ends 111 of the yoke 102b.

With such architecture, the loads at each interface are reasonable and well distributed between each interface. In addition, this arrangement provides an easy/simple accessibility for engine installation/removability.

The articulation of each end of each rod 110a-b is a ball joint.

The rods 110a-b with a XYZ-projection help transferring all loads (TX, TY and TZ) and balancing moments (especially MY and MZ).

The articulation of each end of each shackle 116a-b is a pivot joint and the axes of the pivot joints are perpendicular to the vertical median plane P.

The axis of the shackles 116a-b goes through the lateral panels and the strong rib N1, thus loading both parts in shear and preventing the introduction of additional moments in the box 103. According to a specific embodiment, the pin used in the first articulation point 117a is a doubled pin. A doubled pin consists in an internal cylinder inserted in an external hollow cylinder. In this case, if the external cylinder is broken, the internal cylinder will replace it.

According to a specific embodiment, the third articulation point 117c is a waiting fail safe connection point. It means that this connection will be activated only if another connection is broken.

To realize the waiting fail safe connection, the diameter of the pin used in the clevis is smaller than the diameter of at least one of the holes where the pin is inserted. In normal conditions, the pin is not in contact with the clevis with the larger diameter and when one of the components is defective, the components move and the pin comes into contact with the two clevis including the one with the larger diameter and the gap would close which would engage that lug for transferring loads.

In particular, the waiting fail safe connection points compensate the loss of one rod 110a-b. This makes it possible to preserve a resilient Fail-Safe assembly without requiring a doubling of the rods 110a-b.

If the pin of the second articulation point 117b is a simple pin, the waiting fail safe connection point is activated in case of said simple pin failure or front rod 110a-b failure.

If the pin of the second articulation point 117b is a doubled pin, the waiting fail safe connection point is only activated in case of one front rod 110a-b failure.

While the use of the waiting fail safe connection points does not require a doubling of the rods 110a-b, the vertical shackles 116a-b are doubled to preserve the integrity of the mounting assembly in case of a failed shackle (doubled shackle, lug, and pins).

As explained above, the pin connected to the engine pylon 102 is doubled to prevent its loss.

In a specific embodiment, the front rods 110a-b are not doubled, the rear rods 152a and the associated lugs and pins are doubled, the shackles 116a-b and the associated lugs and pins are doubled.

In the present embodiment, the shackles 116a-b are arranged between the rods 110a-b.

## Claims

1. Propulsion system (100) for an aircraft (10) comprising:
- a turbojet engine (104) having a fan casing (104a) extending along a longitudinal direction (X) and having a vertical median plane (P),
- an engine pylon (102) comprising a box (103) with a nose (102a) at the front of the box (103) and a yoke (102b) fastened under the box (103) and extending on both sides of the vertical median plane (P),
- two rods (110a-b) arranged on each side of the vertical median plane (P), each having a first end articulated to the yoke (102b) and a second end articulated to a front lug (112a-b) of the fan casing (104a), and
- two shackles (116a-b) arranged on each side of the vertical median plane (P), each being mounted articulated to the nose (102a) through a first articulation point (117a), and to a middle lug (118a-b) of the fan casing (104a) through a second articulation point (117b) and a third articulation point (117c).

2. Propulsion system (100) according to claim 1, **characterized in that** a doubled pin is used in the first articulation point (117a).

3. Propulsion system (100) according to any of the preceding claims, **characterized in that** the third articulation point (117c) is a waiting fail safe connection point.

4. Propulsion system (100) according to any of the preceding claims, **characterized in that** the articulation of each end of each rod (110a-b) is a ball joint.

5. Propulsion system (100) according to any of the preceding claims, **characterized in that** the articulation of each articulation point (117a-c) is a pivot joint.

6. Propulsion system (100) according to claim 5, **characterized in that** the axes of the pivot joints are perpendicular to the vertical median plane (P).

7. Propulsion system (100) according to any of the preceding claims, **characterized in that** the shackles (116a-b) are arranged between the rods (110a-b).

8. Aircraft (10) comprising a propulsion system (100) according to one of the preceding claims.
